# EUROPÄISCHE PATENTANMELDUNG

(11) **EP 2 301 359 A1**
(43) Veröffentlichungstag der Anmeldung: **30.03.2011**
(21) Anmeldenummer: 10009342.6
(22) Anmeldetag: 08.09.2010
(51) Int. Cl.: A21C 11/10, B65D 85/32

(54) **Eierkarton aus Kunststoff**

(30) Priorität: 29.09.2009 DE 102009043364
(71) Anmelder: Karaoglu, Cüneyt, 49393 Lohne (DE)
(72) Erfinder: Karaoglu, Cüneyt, 49393 Lohne (DE)
(74) Vertreter: Lenzing, Andreas

(57) **Zusammenfassung**

Die Erfindung betrifft eine Eierverpackung aus Kunststoff für eine Mehrzahl von Hühnereiern oder dergleichen, mit einem Unterteil (2), das eine Mehrzahl von Aufnahmen (3) für Eier aufweist, und mit einem Deckel (4), der einen umlaufenden Rand (10) und eine Deckelwand (11) aufweist und der mit dem Unterteil (2) klappbar verbunden ist, wobei auf der Innenseite der Deckelwand (11) wenigstens eine Ausstechform (12, 13) für Gebäck lösbar angeordnet ist.

## Beschreibung

Die vorliegende Erfindung betrifft eine Verpackung für Eier oder dergleichen, insbesondere Hühnereier.

Solche Verpackungen sind aus der Praxis bekannt. Sie lassen sich zum einen nach dem Material einteilen. Die häufigste Art der Eierverpackung wird aus Papiermaché hergestellt. Seltener kommen Eierverpackung aus Kunststoff zum Einsatz.

Weiter lassen sich Eierverpackungen dahingehend unterscheiden, dass eine im Handel besonders häufige anzutreffende Ausführungsform ein strukturiertes Unterteil mit Aufnahmen für die einzelnen Eier und ein Oberteil mit einem mehr oder weniger planen Deckel aufweist, während eine andere Ausführungsform sowohl in dem Unterteil der Verpackung als auch in dem Oberteil der Verpackung Aufnahmen für die Eier ausweist. Die letztgenannte Bauart von Eierverpackungen aus Kunststoff ist beispielsweise in der deutschen Offenlegungsschrift DE 10012364 Al dargestellt, bei der symmetrische Aufnahmen an der Oberseite und der Unterseite der Verpackung vorgesehen sind. Diese sind von den benachbarten Einzelverpackungen trennbar und können als Eierbecher verwendet werden. In der Offenlegungsschrift wird zudem vorgeschlagen, die Verpackungen durch Prägungen, Aufdrucke, Aufkleber oder sonstige Applikationen an der Deckelinnenseite besonders attraktiv zu machen. Es handelt sich hierbei um dekorative Ausgestaltungen, die die Konsumenten beim Kauf der Verpackung und insbesondere bei der Verwendung der einzelnen Abschnitte als Eierbecher ansprechen sollen.

Weitere Ausgestaltungen mit strukturierter Ober- und Unterseite finden sich in dem deutschen Gebrauchsmuster 7125304, der Offenlegungsschrift DE 1811083 sowie in der Offenlegungsschrift DE 2507267 A1.

Verpackungen mit Oberteilen ohne nestartige Strukturen für die Halterung der einzelnen Eier sind bekannt aus den Offenlegungsschriften DE 3734567 A1, DE 1905991, DE 1903234 sowie aus der Patentschrift DD 106322 und dem deutschen Gebrauchsmuster DE 29906632 U1. Bei diesen Verpackungen, die ganz oder teilweise aus Kunststoff hergestellt sind, wird die Oberseite des glatten Deckels im Allgemeinen für den Aufdruck von Herstellerhinweisen und Werbung verwendet.

Neben der Funktion als transportsichere und produktgerechte Verpackung weist nur die erstgenannte Offenlegungsschrift einen Mehrwert der Verpackung für den Endkunden auf, indem die einzelnen Behälterabschnitte als Eierbecher verwendet werden können. Auch diese sind aber in der Regel für den einmaligen Gebrauch vorgesehen und werden dann entsorgt.

Es ist deshalb Aufgabe der vorliegenden Erfindung eine Verpackung für Eier zu schaffen, die für den Endkunden einen erkennbaren dauerhaften Mehrwert bietet und die so einen besonderen Kaufanreiz dargestellt.

Diese Aufgabe wird von einer Eierverpackung mit den Merkmalen des Anspruchs 1 gelöst.

Weil auf der glatten Innenseite des Deckels über abbrechbare Stege wenigstens eine Ausstechform für Gebäck angeordnet ist, kann der Endkunde diese Ausstechform von der eigentlichen Verpackung trennen und zum Backen benutzen. Die Ausstechform kann mehrfach benutzt werden, auch nach Entsorgung oder Rückgabe der Verpackung. Die Verpackung selbst bleibt für eine erneute Verwendung intakt oder kann ohne die abgetrennte Ausstechform verwertet werden.

Es können verschiedene Gestaltungen für die Ausstechformen gewählt werden, sodass sich eine zusätzliche Attraktivität für den Erwerb von mehreren Verpackungen mit unterschiedlichen Ausstechformen ergibt. Die Verpackungen werden vorzugsweise im Spritzgussverfahren hergestellt, wobei die Ausstechform aus dem selben Material hergestellt wird, wie die übrige Verpackung.

Das Bodenteil der Verpackung weist nestartige Ausformungen für die Aufnahme einzelner Eier auf. Vorzugsweise sind in den nestartigen Ausformungen nach innen weisende, federnde Laschen vorgesehen, die die Eier federnd halten. Hierdurch wird die Verpackung in gleicher Weise für Eier unterschiedlicher Größenklassen verwendbar. Die Laschen sind an ihrem im geschlossenen Zustand der Verpackung oberen Ende, das dem Deckel zugewandt ist, in einer geraden Verbindungslinie mit dem Grundkörper der Verpackung verbunden, während sie an drei Seiten frei nach unten ragt. Die Laschen ragen im unbelasteten Ruhezustand in den Nestraum hinein, der für das Einsetzen eines Eis vorgesehen ist. Das eingesetzte Ei verdrängt dann die Laschen vorzugsweise entgegen ihrer Federkraft nach außen.

Nachfolgend wird ein Ausführungsbeispiel der vorliegenden Erfindung anhand der Zeichnung beschrieben.

Es zeigen:
- Figur 1:: eine Eierverpackung in geöffnetem Zustand in einer perspektivischen Darstellung von oben;
- Figur 2:: die Verpackung aus Figur 1 in einer perspektivischen Ansicht von der Unterseite; sowie
- Figur 3:: die Eierverpackung gemäß Figur 1 und Figur 2 in einem Querschnitt entlang der Linie III - III aus Fig. 2.

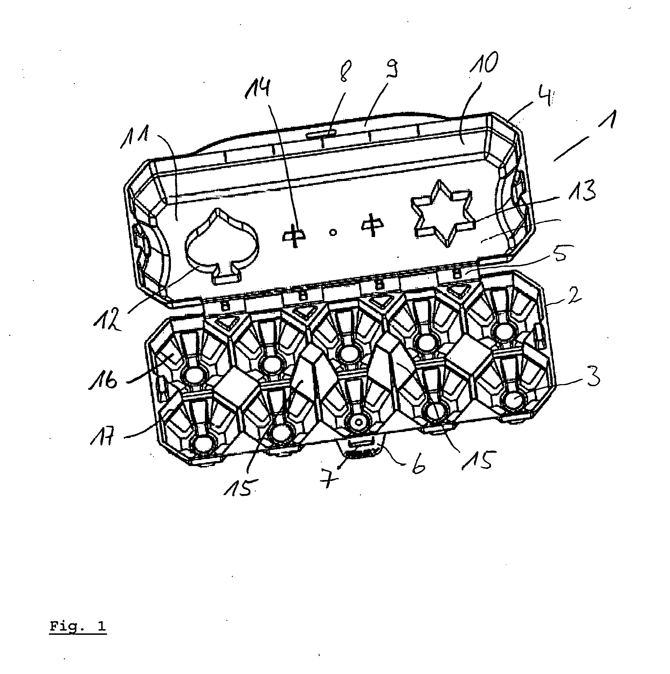

In der Figur 1 ist eine Eierverpackung 1 für zehn Hühnereier dargestellt. Die Verpackung weist ein strukturiertes Unterteil 2 mit insgesamt zehn nestartigen Aufnahmen 3 für Hühnereier auf.

Ein Oberteil 4 der Verpackung 1 ist über Folienscharniere 5 mit dem Unterteil 2 schwenkbar verbunden. Das Unterteil 2 und das Oberteil 4 sind von der äußeren Form her etwa deckungsgleich. Sie können aufeinander geklappt werden. Zum lösbaren Verschließen der Verpackung 1 weist das Unterteil 2 eine Lasche 6 auf, die mit einer Rastnase 7 in eine Öffnung 8 einer weiteren Lasche 9 des Oberteils 4 greifen kann. Im geschlossenen Zustand umschließen das Unterteil 2 und das Oberteil 4 den Innenraum der zur Aufnahme der insgesamt zehn Hühnereier dient.

Das Oberteil 4 weist einen umlaufenden Rand 10 auf, der eine im wesentlichen ebene Deckelwand 11 begrenzt. Die Deckelwand 11 trägt insgesamt 2 Ausstechformen 12 und 13. Die Ausstechformen 12, 13 sind einstückig mit der Verpackung 1 ausgebildet. Sie sind über nicht dargestellte Trennstege mit der Deckelwand 11 verbunden. Die Trennstege sind so ausgebildet, dass die Ausstechformen 12 und 13 durch Abbrechen oder Abschneiden einfach von der Deckelwand 11 gelöst werden können, ohne dass die Ausstechformen 12, 13 hierbei beschädigt werden. Vorzugsweise bleibt auch die Deckelwand 11 beim Abtrennen der Ausstechformen 12 und 13 intakt. Weiter trägt die Deckelwand 11 insgesamt zwei Stützkreuze 14, die im geschlossenen Zustand der Verpackung 1 mit entsprechenden mittigen Pfeilern 15 in Anlage kommen. Die Stützkreuze 14 verhindern mit den Pfeilern 15, das bei Stapelung der geschlossenen und gefüllten Verpackungen 1 ein Druck in Vertikalrichtung auf die darin enthaltenen Eier ausgeübt wird.

Die einzelnen Aufnahmen 3 sind mit jeweils vier Laschen 16 versehen, die einstückig mit der Verpackung 1 geformt sind. Die Laschen 16 sind etwa trapezförmig und entlang einer linienförmigen Verbindung 17 federnd und schwenkbar mit dem Grundkörper des Unterteils 2 verbunden. Die drei übrigen geraden Seiten der Laschen 16 stehen frei. Die Laschen 16 sind also federnd vorgespannt und weisen schräg in den Innenraum der Aufnahmen 3 hinein. Ein dort aufgesetztes Hühnerei wird zunächst von den federnden Laschen 16 zentriert und federnd gehalten, sodass sich die Aufnahmen 3 durch die federnden Laschen 16 auch an die möglicherweise unterschiedlichen Größen der eingesetzten Eier anpassen können.

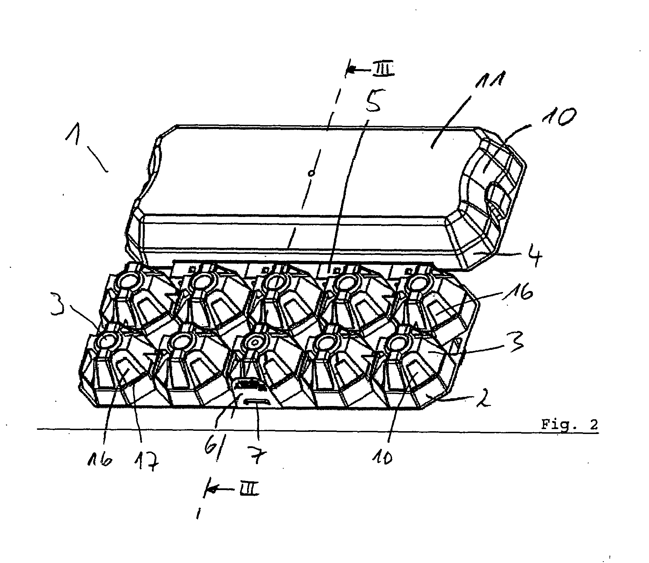

Die Figur 2 zeigt die in Figur 1 dargestellte Verpackung von der Unterseite. Gleiche Bauelemente weisen gleiche Bezugsziffern auf. In dieser Darstellung ist erkennbar, dass die Laschen 10 frei in den Innenraum der Aufnahmen 3 hinein stehen. Die Deckelwand 11 ist an ihrer hier sichtbaren Außenseite plan und glatt ausgebildet, sodass hier Etiketten angebracht werden können, die die lebensmittelrechtlich erforderlichen Angaben und weitere Hinweise auf die Eigenschaften der darin enthaltenen Gegenstände tragen.

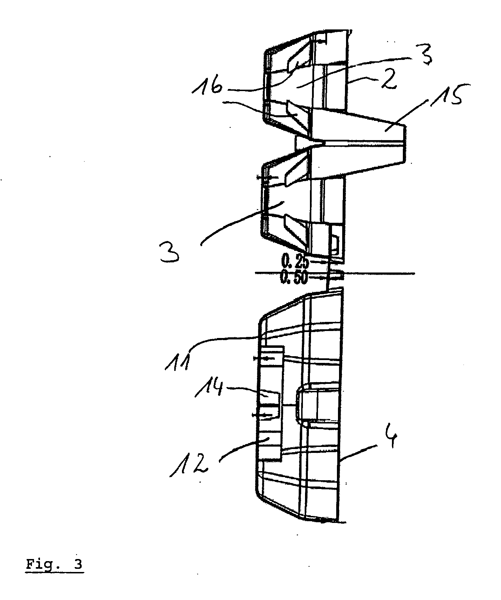

Die Figur 3 zeigt schließlich einen Querschnitt durch die Verpackung aus Figur 1 und Figur 2 entlang der Linie III-III in Figur 2.

In dieser Darstellung ist besonders erkennbar, dass der Pfeiler 15 zusammen mit dem Stützkreuz 14 eine Kompression der geschlossenen Verpackung in vertikaler Richtung verhindert und so eine Belastung der darin aufgenommenen Eier beim Stapeln der Verpackung ausschließt. Es ist weiter ersichtlich, wie die Laschen 16 im unbelasteten Zustand in den Innenraum der Aufnahmen 3 hinein ragen.

Schließlich ist in dieser Darstellung erkennbar, dass die Ausstechform 12 in unmittelbarer Anlage mit der Deckelwand 11 steht. Die Anordnung der Ausstechform 12 ist dabei so gewählt, dass sie im geschlossenen Zustand der Verpackung 1 zwischen den Spitzen derjenigen Eier liegt, die in den gegenüberliegenden Aufnahmen 3 des Unterteils 2 angeordnet sind. Die Stapelhöhe der geschlossenen Verpackung 1 wird durch diese Anordnung der Ausstechformen 12, 13 deshalb nicht vergrößert.

Abweichend von diesem Ausführungsbeispiel könnte die Anordnung der Ausstechformen 12 und 13 auch so gewählt werden, dass eine Spitze eines gegenüberliegenden Hühnereis im Innern der ringförmig aufgebauten Ausstechform liegt. Auch in diesem Fall würde die Stapelhöhe der geschlossenen Verpackung durch die Ausstechform nicht vergrößert.

Für die Herstellung der insoweit beschriebenen Verpackung wird eine entsprechende Spritzgussform vorgesehen, die für sechs oder wie im dargestellten Fall zehn Aufnahmen 3 ausgeführt sein kann. Die Spritzgussform wird bei der Fertigung in bekannter Weise mit Kunststoff gefüllt, der über Bohrungen auch die Formhohlräume der Ausstechformen 12 und 13 füllt. Diese Bohrungen oder Kanäle enthalten dann den Kunststoff, der nach Verfestigung die Verbindungsstege zwischen der Deckelwand 11 und den Ausstechformen 12 und 13 darstellen. Diese Bohrungen oder Kanäle können im Querschnitt sehr klein sein, damit das Lösen der Ausstechformen 12 und 13 besonders einfach ist und weder die Formen noch die restliche Verpackung hierdurch beschädigt werden.

## Patentansprüche

1. Eierverpackung aus Kunststoff für eine Mehrzahl von Hühnereiern oder dergleichen, mit einem Unterteil (2), das eine Mehrzahl von Aufnahmen (3) für Eier aufweist, und mit einem Deckel (4), der einen umlaufenden Rand (10) und eine Deckelwand (11) aufweist und der mit dem Unterteil (2) klappbar verbunden ist, **dadurch gekennzeichnet, dass** auf der Innenseite der Deckelwand (11) wenigstens eine Ausstechform (12, 13) für Gebäck lösbar angeordnet ist.

2. Eierverpackung nach Anspruch 1, **dadurch gekennzeichnet, dass** zwei verschieden gestaltete Ausstechformen (12, 13) an der Deckelwand angeordnet sind.

3. Eierverpackung nach einem der vorhergehenden Ansprüche, **dadurch gekennzeichnet, dass** die Verpackung im Spritzgussverfahren hergestellt ist, wobei die Ausstechform (12, 13) aus demselben Material hergestellt ist wie die übrige Verpackung.

4. Eierverpackung nach einem der vorhergehenden Ansprüche, **dadurch gekennzeichnet, dass** das Bodenteil (2) nestartige Ausformungen (3) für die Aufnahme einzelner Eier aufweist, wobei in den nestartigen Ausformungen (3) nach innen weisende, federnde Laschen (16) vorgesehen sind.

5. Eierverpackung nach einem der vorhergehenden Ansprüche, **dadurch gekennzeichnet, dass** das Oberteil (4) mittels Folienscharnieren (5) an dem Unterteil (2) gelenkig befestigt ist.

6. Eierverpackung nach einem der vorhergehenden Ansprüche, **dadurch gekennzeichnet, dass** abbrechbare Stege zur Verbindung der Ausstechformen (12, 13) mit der Deckelwand (11) vorgesehen sind.
